# NEUE EUROPÄISCHE PATENTSCHRIFT

(11) **EP 3 023 362 B2**
(45) Veröffentlichungstag und Bekanntmachung des Hinweises auf die Entscheidung über den Einspruch: **25.02.2026**
(45) Hinweis auf die Patenterteilung: 03.01.2018
(21) Anmeldenummer: 15197336.9
(22) Anmeldetag: 22.07.2011
(51) Int. Cl.: B65D 85/804

(54) **PORTIONSKAPSEL MIT KENNUNG**
PORTION CAPSULE HAVING AN IDENTIFIER
CAPSULE DE PORTION AVEC MOYEN D'IDENTIFICATION

(30) Priorität: 22.07.2010 DE 102010031988; 02.09.2010 DE 102010044251; 07.02.2011 DE 102011010534
(43) Veröffentlichungstag der Anmeldung: 25.05.2016
(62) Teilanmeldung aus: 15173071.0
(73) Patentinhaber: Société des Produits Nestlé S.A., 1800 Vevey (CH)
(72) Erfinder: KRÜGER, Marc, 51467 Bergisch Gladbach (DE)
(74) Vertreter: Schnyder, Frank Simon

(56) Entgegenhaltungen:
- EP-A1- 0 455 337
- EP-A1- 0 468 079
- EP-A1- 1 849 718
- EP-B1- 2 012 994
- WO-A1-01/60712
- WO-A1-02/078498
- WO-A1-02/28241
- WO-A1-2011/141532
- FR-A1- 2 556 323
- US-A1- 2002 048 621
- US-A1- 2008 187 638
- US-A1- 2010 078 480

## Beschreibung

Die vorliegende Erfindung betrifft eine Portionskapsel zur Herstellung eines Getränkes mit einem Basiselement, das einen Hohlraum aufweist, in dem ein Getränkerohmaterial vorgesehen ist und der von einer Membran, die an dem Basiselement befestigt ist, verschlossen wird, die an dem Randbereich des Basiselements befestigt ist, wobei sie eine Kennung aufweist, die es ermöglicht die jeweilige Portionskapsel zu individualisieren,. Derartige Portionskapseln sind hinlänglich, beispielsweise aus der WO 02/078498 A1, der US 2010/078480 A1 sowie der US 2008/187638 A1 bekannt und werden in einer Vielzahl von Ausführungsformen am Markt angeboten. Da sich diese Kapseln oftmals relativ ähnlich sind, kann es vorkommen, dass Kapseln eines Herstellers in Kaffeeautomaten eines anderen Herstellers verwendet werden, wofür sie nicht geeignet sind. Dadurch können sich erhebliche Sicherheitsprobleme ergeben und/oder der Kaffeeautomat kann beschädigt werden. Eine Verpackung mit einem Barcode zur Zubereitung eines Getränkes ist auch in US 2002/0048621 beschrieben.

Es war deshalb die Aufgabe der vorliegenden Erfindung, eine Portionskapsel zur Verfügung zu stellen, die nur für einen ganz bestimmten Kaffeeautomaten geeignet ist. Gelöst wird die Aufgabe mit einer Portionskapsel nach Anspruch 1.

Die vorliegende Erfindung betrifft eine Portionskapsel zur Herstellung eines Getränkes oder Lebensmittels, welches einen Hohlraum aufweist, in dem ein Getränkerohmaterial vorgesehen ist. Eine derartige Portionskapsel wird beispielsweise aus Kunststoff, einem Naturstoff und/oder einem biologisch abbaubaren Werkstoff hergestellt und weist in der Regel ein Basiselement, insbesondere ein tiefgezogenes Basiselement, auf, das vorzugsweise kegelstumpfförmig oder zylindrisch geformt ist. In den Hohlraum der Portionskapsel wird das Getränkerohmaterial eingefüllt, das beispielsweise von einer Flüssigkeit, insbesondere Wasser, extrahiert und/oder aufgelöst wird. Das Basiselement wird nach dem Einfüllen des Getränkerohmaterials mit einer Membran verschlossen. Die Membran ist dem Boden des Basiselementes gegenüberliegend vorgesehen. Die Membran kann aus demselben oder einem unterschiedlichen Werkstoff als das Basiselement gefertigt sein und wird vorzugsweise durch Siegeln und/oder Kleben an dem Basiselement befestigt. Desweiteren können in dem Hohlraum ein oder mehrere Einbauelemente, wie beispielsweise ein Filter, ein Flüssigkeitsverteiler, ein Vlies, ein Filz, eine Absperrfolie und/oder dergleichen vorgesehen werden. Für den Fall, dass ein Filz und ein Vlies vorgesehen sind, sind diese vorzugsweise miteinander verbunden. Der Flitz und/oder das Vlies können mehrlagig vorgesehen werden, wobei sich die Lagen in der Art des verwendeten Ausgangsmaterials und/oder dessen Verarbeitung unterscheiden können. Die Membran und/oder der Boden können mit mehreren Ausnehmungen (Löchern) versehen sein.

Erfindungsgemäß ist nun vorgesehen, dass diese Portionskapsel eine Kennung aufweist, die es ermöglicht, die jeweilige Portionskapsel zu individualisieren. Individualisieren im Sinne der Erfindung bedeutet vorzugsweise, dass die jeweilige Portionskapsel einer Gruppe zugeordnet werden kann, die für den jeweiligen Kaffeeautomaten geeignet ist. Es ist nicht nötig, dass der Kaffeeautomat erkennt, um welche Portionskapsel es sich speziell handelt, sondern lediglich erkennt, dass die jeweilige Portionskapsel zu einer Gruppe von Portionskapseln gehört, die für den jeweiligen Kaffeeautomaten geeignet ist. Individualisieren bedeutet insbesondere, dass Portionskapseln, die nicht für den jeweiligen Kaffeeautomaten geeignet, in diesen nicht einführbar sind und/oder direkt wieder herausfallen und/oder dass der Kaffeeautomat nur mit richtigen Kapseln in Betrieb zu nehmen ist. Vorzugsweise erfasst ein an dem Kaffeeautomaten vorgesehener Sensor/Detektionsmittel diese Kennung und vergleicht sie vorzugsweise mit einer abgespeicherten Kennung. Vorzugsweise ist der Kaffeeautomat nur dann in Betrieb zu nehmen, insbesondere seine, das Wasser zur Verfügung stellende Druckpumpe, wenn die ermittelte Kennung mit der Referenzkennung übereinstimmt. Andernfalls ist der Kaffeeautomat nicht in Betrieb zu nehmen. Vorzugsweise ist das Detektionsmittel im Bereich des Einwurfschachtes des Kaffeeautomaten für die Portionskapseln vorgesehen. In einer anderen bevorzugten Ausführungsform ist das Detektionsmittel im Bereich der Brühkammer vorgesehen. Alternativ verhindert die Kennung ein Einführen der Kapsel in den Kaffeeautomaten.

Weiterhin erfindungsgemäß ist die Kennung ein Barcode. Mit der erfindungsgemäßen Portionskapsel ist es möglich, zu verhindern, dass Portionskapseln, die nicht für einen bestimmten Kaffeeautomaten vorgesehen sind, in diesen eingeführt werden. Weiterhin ist es anhand der Kennung möglich, dass der Kaffeeautomat erkennt, welche Art von Kapsel sich in seiner Brühkammer befindet und den Getränke- oder Lebensmittelherstellungsprozess d. h. beispielsweise die Menge an Wasser, deren Druck und/oder deren Temperatur entsprechend einstellt.

Vorzugsweise ist im Bodenbereich, durch Materialabtrag, beispielsweise mittels eines Lasers, eine Schwächung vorgesehen. Diese Schwächung ist insbesondere in dem Bereich des Bodens der Kapsel vorgesehen, der für die Herstellung des Getränkes von einem Dorn durchstochen wird. Dadurch, dass die Folie im Bereich des Dorns beispielsweise durch Materialabtrag mittels eines Lasers geschwächt ist, ist der Kraftaufwand, der zum Durchstoßen der Folie benötigt wird, geringer. Der Dorn eines entsprechenden Kaffeeautomaten kann eine Kraftbegrenzung beispielsweise in Form einer Feder aufweisen, die die Kraft begrenzt mit der der Dorn gegen den Portionskapselboden drücken kann. Dadurch wird vermieden, dass Kapseln die eine entsprechende Schwächung nicht aufweisen in einem entsprechenden Kaffeeautomaten zum Einsatz kommen können. Die Schwächung stellt folglich ebenfalls eine Kennung dar.

Erfindungsgemäß weist die Portionskapsel einen Randbereich auf, der an dem Basiselement vorgesehen ist. Der rand ist an dem dem Boden gegenüberliegenden Bereich des Basiselementes vorgesehen. An diesem Randbereich wird eine Membran zum Verschließen des Basiselementes angeordnet, nachdem das Rohmaterial in die Portionskapsel eingefüllt ist. Der Rand kann aber auch dazu dienen, die Kapsel in einem Einwurfschacht so zu führen, dass sie in einer ganz bestimmten Lage in eine Brühkammer fällt. Gleichzeitig kann der Rand als Anschlags- und/oder Dichtungsfläche dienen.

Das Getränkerohmaterial umfasst insbesondere Kaffeepulver (vorzugsweise gemahlenen Röstkaffee), Schokoladenpulver, Milchpulver, Tee oder dergleichen. Alternativ ist denkbar, dass das Getränkerohmaterial ein Getränkeextrakt, wie beispielsweise Instant-Kaffee umfasst.

Bevorzugt ist ferner vorgesehen, dass das Basiselement vom Bodenbereich abgewandt einen Randbereich zur Befestigung der Membran an dem Basiselement aufweist, wobei der Wandungsbereich zwischen dem Bodenbereich in dem Randbereich vorzugsweise einen Absatz aufweist.

Vorzugsweise weist das Basiselement im Bereich des Absatzes einen größeren Durchmesser auf als im Wandungsbereich zwischen dem Absatz und dem Bodenbereich.

Hierdurch ergibt sich in vorteilhafter Weise eine besonders einfache und robuste Möglichkeit, eine Stapelbarkeit der Portionskapseln bzw. eine Stapelbarkeit des Basiselements der Portionskapseln herbeizuführen.

Weitere bevorzugte Ausführungsformen der vorliegenden Erfindung betreffen Varianten der Portionskapsel, bei denen das folgende Merkmal realisiert ist:
- das Basiselement verjüngt sich im Bereich des Absatzes in Richtung zum Flansch hin.

Weitere bevorzugte Ausführungsformen der vorliegenden Erfindung betreffen eine Realisierung der Portionskapsel mit einem Verhältnis des Durchmessers des an den Randbereich angrenzenden Wandungsbereichs einerseits zum Durchmesser des Randbereichs andererseits zwischen 0,85 und 0,89, insbesondere im Wesentlichen 0,87.

Ferner ist vorteilhaft vorgesehen, dass der Durchmesser des an den Randbereich angrenzenden Wandungsbereichs im Wesentlichen 39 mm und/oder der Durchmesser des Flansches im Wesentlichen 45 mm beträgt. Ferner ist bevorzugt vorgesehen, dass das Basiselement im Bereich des Absatzes eine größere Wandstärke aufweist als im Wandungsbereich zwischen dem Bodenbereich und dem Rand. Hierdurch ist es aufgrund der verbesserten Stabilität aufgrund der Formgebung der Portionskapsel mit den Rillen im Wandungsbereich möglich, eine erhebliche Materialeinsparung und damit Kosten und Energieaufwand zur Herstellung der Portionskapsel zu reduzieren.

Ferner ist es erfindungsgemäß auch bevorzugt vorgesehen, dass innerhalb des Hohlraums ein Filterelement angeordnet ist, welches den Hohlraum in einen ersten Bereich zur Ordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial umfasst.

Ein weiterer Gegenstand der vorliegenden Erfindung ist die Verwendung einer erfindungsgemäßen Portionskapsel zur Herstellung eines Heißgetränks.

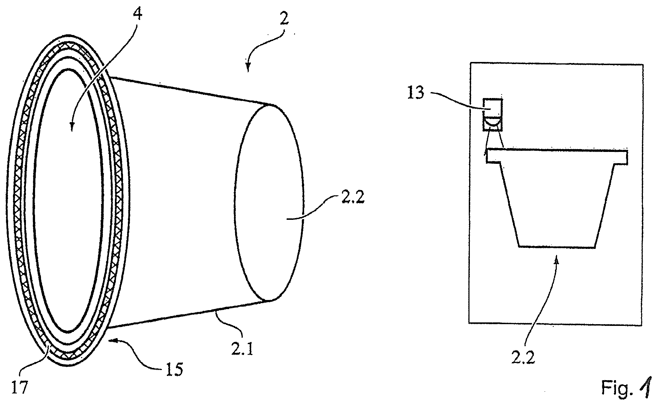

Im Folgenden wird die Erfindung anhand der Figur 1 erläutert.

**Figur** 1 zeigt eine Portionskapsel mit einem Barcode.

In dem vorliegenden Fall weist die Portionskapsel im Bereich der Oberseite der Membran einen Barcode auf. Dieser Barcode kann aufgedruckt durch einen Materialabtrag oder mit in der Folie vorhandenen optisch erkennbaren Mitteln, beispielsweise Fluoreszenzmitteln, hergestellt werden. Alternativ können entsprechende Metallringe Teil der Folie sein oder auf der Folie angebracht werden. Die Bereiche des Barcodes können auch aus einem ferromagnetischen Material bestehen. Erfindungsgemäß kann der Barcode wie durch den Pfeil 15 symbolisiert an der der Membran abgewandten Seite des Randbereichs des Basiselementes vorgesehen werden. Dieser Barcode wird von einem Detektor 13 ausgelesen, beispielsweise in einem Einwurfschacht. Der Barcode stellt die erfindungsgemäße Kennung dar.

### Bezugszeichenliste:

2 Basiselement
2.1 Wandung
2.2 Bodenbereich
4 Membran
13 Detektionsmittel, Scanner. Fühler
15
17 Barcode

## Patentansprüche

1. Portionskapsel zur Herstellung eines Getränks mit einem Basiselement (2), das einen Hohlraum aufweist, in dem ein Getränkerohmaterial vorgesehen ist, wobei diese einen Randbereich aufweist, der an dem Basiselement (2) vorgesehen ist und der Hohlraum von einer Membran (4) verschlossen wird, die an dem Randbereich des Basiselements befestigt ist, wobei die Portionskapsel eine Kennung aufweist, die es ermöglicht, die jeweilige Portionskapsel zu individualisieren, **dadurch gekennzeichnet, dass** die Kennung ein Barcode ist, der an der der Membran abgewandten Seite des Randbereichs des Basiselements (2) vorgesehen ist.

2. Portionskapsel nach Anspruch 1, **dadurch gekennzeichnet, dass** an dem Randbereich eine Dichtfläche vorgesehen ist.

3. Portionskapsel nach einem der vorhergehenden Ansprüche, **dadurch gekennzeichnet, dass** innerhalb des Hohlraums ein Filterelement angeordnet ist, welches den Hohlraum in einen ersten Bereich zur Aufnahme des Getränkerohmaterials und in einen zweiten Bereich zur Aufnahme eines Getränkeextrakts unterteilt.

4. Verwendung einer Portionskapsel nach einem der vorhergehenden Ansprüche zur Herstellung eines Heißgetränks.

## Claims

1. Portion capsule for producing a beverage, having a base element (2) that has a cavity in which a raw beverage material is provided, the said capsule having an edge region which is provided on the base element (2) and the cavity being closed by a membrane (4) which is fixed to the edge region of the base element, the portion capsule having an identifier which makes it possible to individualize the respective portion capsule, **characterized in that** the identifier is a bar code, which is provided on the side of the edge region of the base element (2) that faces away from the membrane.

2. Portion capsule according to Claim 1, **characterized in that** a sealing surface is provided on the edge region.

3. Portion capsule according to one of the preceding claims, **characterized in that** within the cavity there is arranged a filter element, which subdivides the cavity into a first region for holding the raw beverage material and into a second region for holding a beverage extract.

4. Use of a portion capsule according to one of the preceding claims for producing a hot beverage.

## Revendications

1. Capsule pour la préparation d'une boisson avec un élément de base (2), qui présente une cavité dans laquelle il est prévu une matière première de boisson, dans laquelle celle-ci présente une zone de bord qui est prévue sur l'élément de base (2) et la cavité est fermée par une membrane (4), qui est fixée à la zone de bord de l'élément de base, dans laquelle la capsule présente un moyen d'identification, qui permet d'individualiser la capsule respective, **caractérisée en ce que** le moyen d'identification est un code à barres, qui es prévu sur le côté de la zone de bord de l'élément de base (2) situé à l'opposé de la membrane.

2. Capsule selon la revendication 1, **caractérisée en ce qu'il** est prévu une face d'étanchéité sur la zone de bord.

3. Capsule selon l'une quelconque des revendications précédentes, **caractérisée en ce qu'un** élément de filtre est disposé à l'intérieur de la cavité, lequel divise la cavité en une première région destinée à contenir la matière première de boisson et une seconde région destinée à contenir un extrait de boisson.

4. Utilisation d'une capsule selon l'une quelconque des revendication précdentes pour la préparation d'une boisson chaude.
